# EUROPÄISCHE PATENTSCHRIFT

(11) **EP 2 614 287 B1**
(45) Veröffentlichungstag und Bekanntmachung des Hinweises auf die Patenterteilung: **21.03.2018**
(21) Anmeldenummer: 11763586.2
(22) Anmeldetag: 05.09.2011
(51) Int. Cl.: F16L 55/179, F16L 55/26

(54) **VORRICHTUNG ZUM SANIEREN EINES ROHRES**
DEVICE FOR PIPE REHABILITATION
DISPOSITIF POUR RÉNOVATION DE CONDUITES

(30) Priorität: 06.09.2010 DE 102010044465
(43) Veröffentlichungstag der Anmeldung: 17.07.2013
(73) Patentinhaber: I.S.T. Innovative Sewer Technologies GmbH, 44795 Bochum (DE)
(72) Erfinder: VOGT, Jörg, 44879 Bochum (DE); NIEDING, Tim, 36251 Bad Hersfeld (DE); SPERING, Axel, 52076 Aachen (DE)
(74) Vertreter: Isfort, Olaf
(86) Internationale Anmeldenummer: PCT/EP2011/004458
(87) Internationale Veröffentlichungsnummer: WO 2012/031731

(56) Entgegenhaltungen:
- WO-A1-97/02452
- US-A1- 2006 074 525

## Beschreibung

Die Erfindung betrifft eine Vorrichtung zum Sanieren eines Rohres, das mit wenigstens einer in der Wandung des Rohres angeordneten Öffnung versehen ist, aufweisend eine in das Rohr einfügbare Basiseinheit, eine relativ zur Basiseinheit bewegbare Freilegeeinheit und eine elektronische Sensoreinrichtung zum Erfassen der momentanen Stellung der Freilegeeinheit relativ zur Basiseinheit.

Gattungsgemäße Vorrichtungen werden beispielsweise zum Sanieren von Abwasserrohren eingesetzt. Ein zu sanierendes Abwasserrohr wird hierbei mit einer abdichtenden Innenauskleidung, auch Inliner genannt, versehen. Bei diesem Arbeitsgang werden an dem Rohr vorhandene Öffnungen, welche als Zu- oder Ablauf dienen können, mit der Innenauskleidung verschlossen, so dass es nach dem Auskleiden des Rohres erforderlich ist, die Öffnungen wieder freizulegen.

Um die verschlossenen Öffnungen nach dem Auskleiden des Abwasserrohres wieder auffinden zu können, werden herkömmlich vor dem Auskleiden des Rohres die Positionen der Öffnungen erfasst und festgehalten. Hierzu wird die Basiseinheit bis zu dem Abschnitt des Rohres bewegt, an dem eine Öffnung an dem Rohr angeordnet ist, und die hierbei von der Basiseinheit in dem Rohr in Axialrichtung desselben zurückgelegte Strecke erfasst und festgehalten. Gleichzeitig wird die Freilegeeinheit relativ zu der Basiseinheit bis zu der Öffnung bewegt und die Relativstellung von Freilegeeinheit zur Basiseinheit erfasst und festgehalten.

Nach dem Auskleiden des Rohres mit der Innenauskleidung wird die Basiseinheit auf Basis der beim Erfassen der Position der Öffnung erfassten und festgelegten zurückgelegten Strecke wieder bis zu dem Abschnitt des Rohres bewegt, an dem die freizulegende Öffnung an dem Rohr angeordnet ist. Anschließend wird die Freilegeeinheit in die Relativstellung zu der Basiseinheit bewegt, welche bei dem Erfassen der Position der Öffnung erfasst und festgehalten worden ist. In einer derartigen Ausrichtung der Vorrichtung zum Sanieren des Rohres wird dann mittels der Freilegeeinheit Material der Innenauskleidung entfernt, um die Öffnung freizulegen.

Häufig kommt es vor, dass die Basiseinheit während der Freilegens der Öffnung nicht dieselbe Relativstellung zur Horizontalebene einnimmt wie bei dem Erfassen der Position der Öffnung vor dem Auskleiden des Rohres. Weicht aber die Relativstellung der Basiseinheit zur Horizontalebene von derjenigen beim Erfassen der Position der Öffnung ab, so wird zwar die Freilegeeinheit in die vorab festgelegte Relativstellung zu der Basiseinheit gebracht, jedoch stimmt in einem solchen Fall die Positionierung der Freilegeeinheit nicht mit der Position der freizulegenden Öffnung überein. Wird in dieser Ausrichtung der Vorrichtung Material der Innenauskleidung an einer ungewünschten, nicht mit einer Öffnung deckungsgleichen Position entfernt, wird hierdurch eine undichte Stelle an der Innenauskleidung geschaffen und das gewünschte Sanierungsergebnis nicht erreicht. Statt dessen sind zeitintensive und aufwändige Nachbesserungsarbeiten erforderlich, welche eine derartige herkömmliche Sanierung eines Rohres sehr teuer machen. Diese Probleme treten insbesondere deshalb auf, weil die Basiseinheit in Längsrichtung eines Rohres mit ovalen oder kreisförmigen Querschnitt bewegt werden muss und somit nicht auf einer horizontal ausgerichteten ebenen Fläche verfahren wird. Noch gravierender ist das Problem bei dem Freilegen von in einer Krümmung des Rohres angeordneten Öffnungen.

Eine gattungsgemäße Vorrichtung ist zum Beispiel aus dem Dokument US 2006/0074525 A1 bekannt.

Hiervon ausgehend ist es die Aufgabe der Erfindung, eine neuartige Vorrichtung zum Sanieren eines Rohres, das mit wenigstens einer in der Wandung des Rohres angeordneten Öffnung versehen ist, bereitzustellen, mit der die oben genannten Nachteile vermieden werden können, so dass die Sanierung des Rohres zuverlässig und kostengünstig durchführbar ist.

Diese Aufgabe wird durch eine Vorrichtung der eingangs genannten Art dadurch gelöst, dass sie wenigstens einen an der Basiseinheit angeordneten elektronischen Neigungssensor aufweist.

Durch die erfindungsgemäße Anordnung wenigstens eines Neigungssensors an der Basiseinheit ist es möglich, die momentane Relativstellung der Basiseinheit zur Horizontalebene zu erfassen und somit bei der Sanierung zu berücksichtigen. Die beim Erfassen der Position der Öffnung erfasste Relativstellung von Freilegeeinheit zur Basiseinheit kann folglich mit der zu diesem Zeitpunkt gegebenen Relativstellung von Basiseinheit zur Horizontalebene in Verbindung gebracht werden. Hierdurch lässt sich die absolute Position der Öffnung ermitteln und festlegen. Des Weiteren kann auch beim Freilegen der Öffnung die Relativstellung von Basiseinheit zur Horizontalebene berücksichtigt werden, derart, dass die zum Freilegen der Öffnung eingenommene Relativstellung zur Horizontalebene mit der vorab festgelegten absoluten Position der Öffnung in Verbindung gebracht wird, um zu ermitteln, welche Relativstellung die Freilegeeinheit zur Basiseinheit einnehmen muss, um die Öffnung freizulegen, ohne Material der Innenauskleidung in der Umgebung der Öffnung zu entfernen. Durch die erfindungsgemäße Ausgestaltung zum Sanieren eines Rohes, das mit wenigstens einer in der Wandung des Rohres angeordneten Öffnung versehen ist, ist also ein zuverlässiges und kostengünstiges Sanieren des Rohres möglich.

Vorzugsweise sind an der Basiseinheit zwei elektronische Neigungssensoren angeordnet, von denen der eine Neigungen der Basiseinheit um eine parallel zur Längsachse des Rohres angeordnete Achse und der andere Neigungen der Basiseinheit um eine horizontal und quer zu dieser Achse angeordneten Querachse erfasst.

Gemäß einer vorteilhaften Ausgestaltung der Erfindung weist die Vorrichtung eine elektronische Auswertungseinheit auf, die zur Auswertung der von der elektronischen Sensoreinrichtung erzeugten Daten unter Berücksichtung der von dem elektronischen Neigungssensor erzeugten Daten eingerichtet ist. Bei dieser Auswertung der von der elektronischen Sensoreinrichtung erzeugten Daten bezüglich der jeweilig eingenommenen Relativstellung von Freilegeeinheit zur Basiseinheit wird die absolute Position der Öffnung bestimmt. Diese absolute Position kann beispielsweise abrufbar in einem Speicher abgelegt und somit festgehalten werden.

Eine weitere vorteilhafte Ausgestaltung der Erfindung sieht vor, dass die elektronische Auswertungseinheit zur Steuerung der Bewegung der Freilegeeinheit relativ zur Basiseinheit unter Berücksichtung der von dem elektronischen Neigungssensor erzeugten Daten eingerichtet ist. Hierzu wird die gespeicherte absolute Position der Öffnung abgerufen und zu den von dem elektronischen Neigungssensor erzeugten Daten in Beziehung gesetzt. Dadurch lässt sich die zum Freilegen der Öffnung ideale Relativstellung von Freilegeeinheit zur Basiseinheit bestimmen. Anschließend kann die Freilegeeinheit exakt zu der bestimmten idealen Relativstellung bewegt werden.

Nach einer weiteren vorteilhaften Ausgestaltung der Erfindung weist die Vorrichtung eine Einrichtung zum elektronischen Erfassen der momentanen axialen Relativstellung zwischen dem Rohr und der Basiseinheit auf. Hierdurch ist gewährleistet, dass die Basiseinheit nach dem Auskleiden des Rohres wieder exakt bis zu der axialen Relativstellung zwischen Rohr und Basiseinheit verfahren werden kann, in der das Erfassen der Position der Öffnung vor dem Auskleiden des Rohres erfolgt ist.

Ferner wird es als vorteilhaft erachtet, wenn die Auswertungseinheit separat von der Basiseinheit und der Freilegeeinheit außerhalb des Rohres anordbar und mit der Basiseinheit, einer Bedieneinheit als auch mit einer Anzeigeeinheit verbunden ist. Über die Bedieneinheit lassen sich die Basiseinheit und die Bewegungen der Freilegeeinheit relativ zur Basiseinheit von einem Bedienpersonal von außerhalb des Rohres auf gewünschte Art und Weise steuern. Um diese Steuerung exakt vornehmen zu können, werden auf der Anzeigeeinheit beispielsweise die von der elektronischen Sensoreinrichtung und/oder dem elektronischen Neigungssensor erzeugten Daten dargestellt. Zudem kann ein absolutes Koordinatensystem dargestellt werden, in dem die mit der erfindungsgemäßen Vorrichtung bestimmbare absolute Position einer Öffnung festgehalten ist.

Weitere Vorteile und Merkmale der vorliegenden Erfindung werden anhand des in der beigefügten Figur gezeigten Ausführungsbeispiels für die erfindungsgemäße Vorrichtung näher erläutert. Dabei zeigt:

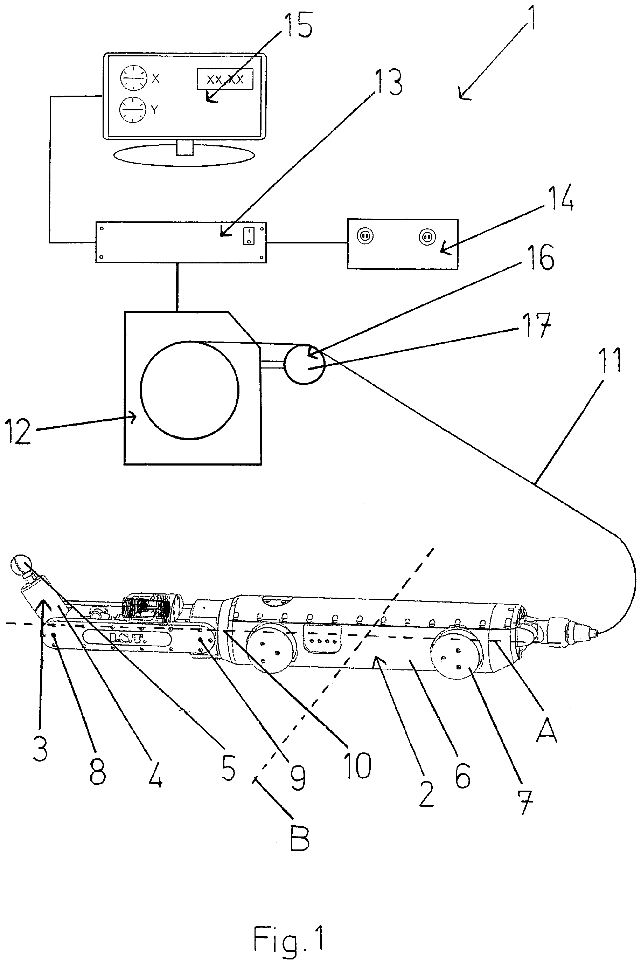

- Figur 1:: eine schematische Darstellung eines Ausführungsbeispiels für die erfindungsgemäße Vorrichtung.

Figur 1 zeigt schematisch ein Ausführungsbeispiel für die erfindungsgemäße Vorrichtung 1 zum Sanieren eines nicht dargestellten Rohres, das mit wenigstens einer in der Wandung des Rohres angeordneten Öffnung versehen ist. Die Vorrichtung 1 weist eine in das Rohr einfügbare Basiseinheit 2 und eine relativ zur Basiseinheit 2 bewegbare Freilegeeinheit 3 auf. Die Freilegeeinheit 3 umfasst einen Motor 4 sowie einen von diesem angetriebenen Fräskopf 5. An dem Grundkörper 6 der Basiseinheit 2 sind vier Räder 7 angebracht, von denen lediglich zwei in Figur 1 dargestellt sind und mittels denen die Basiseinheit 2 in Längsrichtung des Rohres verfahrbar ist.

Die Freilegeeinheit 3 ist relativ zur Basiseinheit 2 bewegbar, wozu die Freilegeeinheit 3 über Gelenke 8 und 9 mit einem Teil 10 der Basiseinheit 2 verbunden ist, wobei das Teil 10 wiederum um die Längsachse A der Basiseinheit 2 drehbar an der Basiseinheit 2 gelagert ist. Die jeweiligen Winkelstellungen an den Gelenken 8 und 9 sowie diejenige des Teils 10 zu der übrigen Basiseinheit 2 werden mittels entsprechend angeordneten Sensormitteln einer elektronischen Sensoreinrichtung der Vorrichtung 1 erfasst. Hierdurch ist die momentane Stellung der Freilegeeinheit 3 zur Basiseinheit 2 erfassbar.

In dem Grundkörper 6 der Basiseinheit 2 sind zwei nicht näher dargestellte elektronische Neigungssensoren angeordnet, welche Neigungen der Basiseinheit 2 um ihre Längsachse A als auch um eine senkrecht zu der Längsachse A angeordneten, horizontalen Querachse B erfassen können.

Die Basiseinheit 2 ist über ein elektrisches Kabel 11, welches von einer Kabeltrommel 12 beim Bewegen der Basiseinheit 2 in das Rohr hinein abgezogen wird, mit einer elektronischen Auswertungseinheit 13 verbunden. An die elektrische Auswertungseinheit 13 sind eine Bedieneinheit 14 sowie eine Anzeigeeinheit 15 angeschlossen. Mittels der Bedieneinheit 14 lässt sich die Vorrichtung 1 auf Basis der von der Anzeigeeinheit 15 dargestellten Informationen von einem Bedienpersonal steuern. Auf der linken Seite der Anzeigeeinheit wird die Neigung der Basiseinheit 2 bezüglich der Achsen A und B angezeigt.

Die Länge des beim Einfahren der Basiseinheit 2 in das Rohr von der Kabeltrommel 12 abgezogenen Kabels 11 wird mittels der Einrichtung 16 erfasst. Die Einrichtung 16 weist hierzu ein Rad 17 auf, dessen Lauffläche mit dem Kabel 11 in Kontakt steht und somit beim Abziehen des Kabels 11 von der Kabeltrommel 12 um einen bestimmten Drehwinkel gedreht wird. Dieser Drehwinkel wird im Zuge einer Winkelmessung erfasst und erlaubt einen Rückschluss auf die jeweilige Länge des von der Kabeltrommel 12 abgezogenen Kabels 11 und somit auf die von der Basiseinheit 2 in dem Rohr zurückgelegte Strecke.

Das anhand der Figur beschriebene Ausführungsbeispiel dient der Erläuterung und ist nicht beschränkend.

## Patentansprüche

1. Vorrichtung (1) zum Sanieren eines Rohres, das mit wenigstens einer in der Wandung des Rohres angeordneten Öffnung versehen ist, aufweisend eine in das Rohr einfügbare Basiseinheit (2), eine relativ zur Basiseinheit (2) bewegbare Freilegeeinheit (3) und eine elektronische Sensoreinrichtung zum Erfassen der momentanen Stellung der Freilegeeinheit (3) relativ zur Basiseinheit (2), einen wenigstens einen an der Basiseinheit (2) angeordneten elektronischen Neigungssensor zum Erfassen der momentanen Relativstellung der Basiseinheit zur Horizontalebene, eine Einrichtung (16) zur Erfassung der von der Basiseinheit (2) in dem Rohr in Axialrichtung desselben zurückgelegten Strecke, einen Speicher zur abrufbaren Speicherung einer absoluten Position der Öffnung und eine elektronische Auswertungseinheit, die beim Erfassen der Position der Öffnung vor dem Auskleiden des Rohres die von der elektronischen Sensoreinrichtung erzeugten Daten unter Berücksichtigung der von dem elektronischen Neigungssensor erzeugten Daten und der von der Einrichtung (16) erfassten, zurückgelegten Strecke auswertet und die absolute Position der Öffnung bestimmt und im Speicher ablegt, und die nach dem Auskleiden des Rohres beim Freilegen der Öffnung unter Abrufung der im Speicher abgelegten Position der Öffnung die Bewegung der Freilegeeinheit (3) relativ zur Basiseinheit (2) unter Berücksichtigung der von dem elektronischen Neigungssensor erzeugten Daten steuert.

2. Vorrichtung (1) nach Anspruch 1, **dadurch gekennzeichnet, dass** die elektronische Auswertungseinheit (13) separat von der Basiseinheit (2) und der Freilegeeinheit (3) außerhalb des Rohres anordbar und sowohl mit einer Bedieneinheit (14), mit der Basiseinheit (2) als auch mit einer Anzeigeeinheit (15) verbunden ist.

## Claims

1. Device (1) for rehabilitating a pipe which is provided with at least one opening arranged in the wall of the pipe, having a base unit (2) that can be inserted into the pipe, a clearing unit (3) that can be moved relative to the base unit (2), and an electronic sensor means for detecting the instantaneous position of the clearing unit (3) relative to the base unit (2), an at least one electronic inclination sensor arranged on the base unit (2) for detecting the instantaneous relative position of the base unit relative to the horizontal plane, a means (16) for detecting the distance covered by the base unit (2) in the pipe in the axial direction of the latter, a memory for the retrievable storage of an absolute position of the opening, and an electronic evaluation unit which, when detecting the position of the opening before the lining of the pipe, evaluates the data generated by the electronic sensor means whilst taking into account the data generated by the electronic inclination sensor and the distance covered that is detected by the means (16), and determines the absolute position of the opening and stores the same in the memory, and which, following the lining of the pipe, when clearing the opening, by retrieving the position of the opening stored in the memory, controls the movement of the clearing unit (3) relative to the base unit (2) while taking into account the data generated by the electronic inclination sensor.

2. Device (1) according to Claim 1, **characterized in that** the electronic evaluation unit (13) can be arranged separately from the base unit (2) and the clearing unit (3) outside the pipe, and is connected to an operating unit (14), to the base unit (2) and also to a display unit (15).

## Revendications

1. Ensemble (1) de nettoyage d'un tube doté d'au moins une ouverture ménagée dans la paroi du tube, l'ensemble présentant
une unité de base (2) apte à être insérée dans le tube,
une unité de dégagement (3) apte à se déplacer par rapport à l'unité de base (2),
un dispositif de capteur électronique qui saisit la position instantanée de l'unité de dégagement (3) par rapport à l'unité de base (2),
un au moins un capteur électronique d'inclinaison disposé sur l'unité de base (2) et qui saisit la position relative instantanée de l'unité de base par rapport au plan horizontal,
un dispositif (16) de saisie du chemin parcouru par l'unité de base (2) dans la direction axiale du tube,
une mémoire qui permet de conserver et de rappeler la position absolue de l'ouverture et
une unité électronique d'évaluation qui, lors de la saisie de la position de l'ouverture avant le revêtement du tube, évalue les données produites par le dispositif électronique de capteur en tenant compte des données délivrée par le capteur électronique d'inclinaison et du chemin parcouru saisi par le dispositif (16), qui détermine la position absolue de l'ouverture et la conserve dans la mémoire et qui, après le revêtement du tube, lors du dégagement de l'ouverture et en interrogeant la position de l'ouverture conservée dans la mémoire, commande le déplacement de l'unité de dégagement (3) par rapport à l'unité de base (2) en tenant compte des données produites par le capteur électronique d'inclinaison.

2. Ensemble (1) selon la revendication 1, **caractérisé en ce que** l'unité électronique d'évaluation (13) peut être placée à l'extérieur du tube séparément de l'unité de base (2) et de l'unité de dégagement (3) et est reliée à la fois à une unité de commande (14), à l'unité de base (2) et à une unité d'affichage (15).
